(19) Europäisches Patentamt
European Patent Office
Office européen des brevets

(11) Veröffentlichungsnummer: **0 575 700 A1**

(12) # EUROPÄISCHE PATENTANMELDUNG

(21) Anmeldenummer: **93104024.0**

(51) Int. Cl.[5]: **B60L 15/10**, B60L 3/10

(22) Anmeldetag: **12.03.93**

(30) Priorität: **20.06.92 DE 4220277**

(43) Veröffentlichungstag der Anmeldung:
**29.12.93 Patentblatt 93/52**

(84) Benannte Vertragsstaaten:
**DE FR GB IT SE**

(71) Anmelder: **Jungheinrich Aktiengesellschaft**
**Friedrich-Ebert-Damm 129**
**D-22047 Hamburg(DE)**

(72) Erfinder: **Baginski, Ralf, Dipl.-Ing.**
**Neu Netze 51**
**W-2121 Netze(DE)**
Erfinder: **Bruns, Rainer, Dr.**
**Scheidereye 20**
**W-2000 Hamburg 67(DE)**

(74) Vertreter: **Dipl.-Ing. H. Hauck, Dipl.-Ing. E. Graalfs, Dipl.-Ing. W. Wehnert, Dr.-Ing. W. Döring**
**Neuer Wall 41**
**D-20354 Hamburg (DE)**

(54) **Verfahren und Vorrichtung zum Anlegen einer Spannung an einen Gleichstrom-Fahrmotor.**

(57) Verfahren zum Anlegen einer Spannung ($U_S$) an einen Gleichstrom-Fahrmotor (14), insbesondere für Flurförderzeuge, bei dem die Spannung durch einen Fahrschaltersignal ($U_F$) vorgegeben und bei schlagartiger Erhöhung des Fahrschaltersignals auf das Maximum oder einem dem Maximum angenäherten Wert, innerhalb einer vorgegebenen Zeitspannung nach Maßgabe einer vorgegebenen Spannungsfunktion (Spannungsrampe) allmählich auf den vorgegebenen Spannungswert angehoben wird, wobei die Spannungsfunktion (3) aus zwei Abschnitten besteht, nämlich einem mit Null beginnenden ersten Funktionsabschnitt großer Steigung, bei dem die Spannung zu einem Bruchteil der vorgegebenen Spannung einen Zwischenwert ($U_Z$) erreicht und einem zweiten Abschnitt kleinerer Steigung, der sich vom Zwischenwert ($U_Z$) zum vorgegebenen Spannungswert ($U_8$) erstreckt.

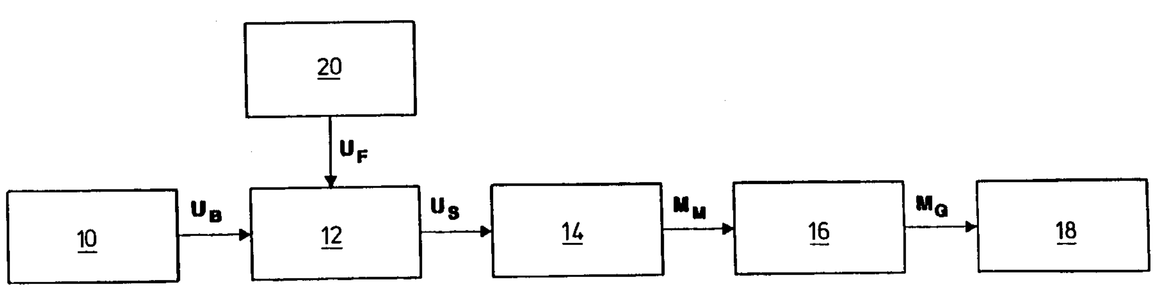


FIG.1

EP 0 575 700 A1

Die Erfindung bezieht sich auf ein verfahren zum Anlegen einer Spannung an einen Gleichstrom-Fahrmotor, insbesondere für Flurförderzeuge, nach dem Oberbegriff des Patentanspruchs 1.

Es ist bekannt, Fahrzeuge, insbesondere Flurförderzeuge, elektrisch anzutreiben. Hierfür wird normalerweise ein Gleichstrommotor verwendet, dessen Klemmen mit Batteriespannung versorgt werden. Die am Motor anliegende Spannung bestimmt das Moment am Antriebsrad des Fahrzeugs und damit seine Beschleunigung bzw. seine Geschwindigkeit. Die Höhe der effektiven Spannung wird durch eine geeignete Impulsschaltung eingestellt, wobei das Steuersignal für die Impulsschaltung von einem Signal abgeleitet wird, das vom Fahrschalter erzeugt wird.

Beim Anfahren dreht der Bediener normalerweise den Fahrschalter schlagartig hoch. Würden besondere Vorkehrungen nicht vorgesehen, ergäbe sich ein Momentenverlauf, der für das Anfahren ungeeignet ist. Es kommt zu einer Überlastung des Antriebsstranges, insbesondere des Getriebes. Der Momentenverlauf zeigt ein deutliches Maximum, das für das jeweilige Getriebe zu hoch sein kann. Das Getriebeeingangsmoment ist bekanntlich der Beschleunigung des Fahrmotors proportional. Außerdem kann es zu einem Durchdrehen des Antriebsrades kommen. Schließlich ist eine abrupte Beschleunigung des Fahrzeugs ergonomisch ungünstig.

Es ist daher bereits bekannt, in der Steuerung für den Fahrmotor eine Zeitspanne bis zum Anlegen der vollen Spannung (Hochlaufzeit) an die Anschlußklemmen des Motors vorzugeben. Zu diesem Zweck wird der Steuerung eine sogenannte Hochlauframpe zugeordnet, nach deren Maßgabe die Spannung eine bestimmte Funktion aufweist, zumeist in Form einer ansteigenden Geraden (Prospekt Telemecanique TRACTIVAR 4 aus dem Jahr 1991).

Auch bei der Verwendung einer derartigen Spannungsrampe ergibt sich ein deutliches Maximum der Momentenkurve, das um so niedriger ist, je länger die Zeitspanne gewählt wird, in der die vorgegebene Spannung bzw. die Quell- oder Batteriespannung am Motor angelegt wird. Dies geschieht bekanntlich dadurch, daß Schaltschütze nach dem Hochlauf den Fahrmotor unmittelbar an die Klemmen der Batterie anlegen Um eine Überlastung des Getriebes zu vermeiden, sind daher ausreichend Hochlaufzeiten bis zum Erreichen der maximalen Spannung notwendig. Ein optimales Anfahrverhalten wird daher nicht erhalten.

Der Erfindung liegt die Aufgabe zugrunde, ein Verfahren zum Anlegen einer Spannung an einen Gleichstrom-Fahrmotor, insbesondere für Flurförderzeuge, anzugeben, mit dem das Anfahrverhalten verbessert wird bei gleichzeitiger Schonung der mechanischen Antriebsteile.

Diese Aufgabe wird gelöst durch die Merkmale des Patentanspruchs 1.

Bei dem erfindungsgemäßen Verfahren wird nicht eine einheitliche Spannungsfunktion, beispielsweise in Form einer ansteigenden Geraden, gewählt, sondern eine aus zwei Abschnitten bestehende Funktion, deren erster mit Null beginnender Abschnitt eine große Steigung und deren zweiter Abschnitt eine kleinere Steigung aufweist. Vorzugsweise bestehen die Funktionsabschnitte gemäß einer Ausgestaltung der Erfindung aus Geraden. Sie sind so gewählt, daß der Zwischenspannungswert, der zum Beispiel bereits 70% der Batteriespannung betragen kann, in sehr kurzer Zeit erreicht wird, beispielsweise in 10 bis 20% der vorgegebenen Zeitspanne für die gesamte Zeit, in der die volle Spannung an den Motor gelegt wird. Je größer die vorgegebene Zeitspanne ist, um so geringer kann die Steigung des ersten Funktionsabschnitts werden und zugleich auch der das Ende des ersten Funktionsabschnitts bildende Zwischenspannungswert.

Bei richtiger Wahl der Steigung für den ersten Funktionsabschnitt und seiner Höhe läßt es sich ohne weiteres erreichen, daß der Momentenverlauf des Fahrmotors bis zum Ende der Hochlaufzeit annähernd konstant ist. Dadurch ergibt sich eine annähernd konstante Beschleunigung für das Fahrzeug bis zum Ende der Hochlaufzeit, wobei die Beschleunigung, die gegenüber dem Stand der Technik höhere Werte aufweist, gleichwohl sich ergonomisch günstig auswirkt. Schließlich wird eine Überlastung der mechanischen Antriebskomponenten vermieden. Diese Vorteile werden erhalten trotz deutlich geringerer Hochlaufzeit für die an den Motor zu legende Spannung. Insgesamt wird daher ein besseres Anfahrverhalten erzielt.

Es versteht sich, daß das Verhalten eines Fahrzeugs beim Anfahren mit und ohne Last deutliche Unterscheide aufweist. Daher sieht eine Ausgestaltung der Erfindung vor, daß zwei oder mehr Spannungsfunktionen vorgesehen sind mit unterschiedlicher Zeitspanne und unterschiedlichem Zwischenspannungswert, die willkürlich vom Fahrer des Fahrzeugs oder automatisch in Abhängigkeit vom Gewicht des Fahrzeugs ausgewählt werden dergestalt, daß mit steigendem Gewicht die Spannungsfunktion mit der jeweils größeren Zeitspanne und dem jeweils kleineren Zwischenspannungswert gewählt werden. Die einzelnen Spannungs- oder Rampenfunktionen können tabellarisch in einem Speicher, beispielsweise einem EPROM, abgelegt werden. Der Fahrer kann willkürlich auf einige der Rampenfunktionen zurückgreifen, falls dies vorgesehen wird. Wahlweise kann auch ein Lastsensor vorgesehen werden, so daß in Abhängigkeit von der Lastgröße eine bestimmte Rampenfunktion ausgewählt wird. Schließlich kann im Speicher eine Vielzahl von Rampenfunktionen gespeichert werden, wobei dann der Anwender eine Auswahl treffen kann, welche Rampenfunktionen für den vorgesehenen Betrieb des Fahrzeugs optimal sind.

Für den Fachmann bereitet es keine Probleme, die Rampenfunktion zu ermitteln. Sie wird so gewählt, daß das maximal zulässige Moment einer Komponente bzw. einer maximal zulässigen Beschleunigung des Fahrzeugs nicht überschritten wird. Dabei bestimmt das schwächste Glied der Antriebskette diese Grenze oder die Vorgabe des Benutzers. Der Spannungsverlauf wird im übrigen so gewählt, daß unterhalb des maximal zulässigen Antriebsmoments die Zeit, die nötig ist, um das Antriebsmoment aufzubauen, minimiert wird.

Die Erfindung wird nachfolgend anhand von Zeichnungen näher erläutert.

Fig. 1 zeigt ein Blockschaltbild einer Steuervorrichtung für ein Flurförderzeug.

Fig. 2 zeigt Rampenfunktionen nach dem Stand der Technik und nach der Erfindung.

Fig. 3 zeigt die sich aus den Funktionen nach Fig. 2 ergebenden Momentenverläufe.

Fig. 4 zeigt den Geschwindigkeitsverlauf gemäß den Rampenfunktionen nach Fig. 2.

Fig. 5 zeigt den Wegverlauf für die Rampenfunktionen nach Fig. 2.

Fig. 6 zeigt eine Kurvenschar von erfindungsgemäßen Rampenfunktionen.

Fig. 7 zeigt den Momentenverlauf nach der Kurvenschar nach Fig. 6.

In Fig. 1 speist eine Batterie 10 über eine Steuerschaltung 12 einen Gleichstrommotor 14, der über ein Getriebe 16 ein Rad 18 eines Fahrzeugs, beispielsweise eines Flurförderzeugs antreibt. Die Steuerschaltung 12 ist mit einem Fahrschalter 20 verbunden, der vom Fahrer betätigt wird. Der Ausschlag am Fahrschalter bestimmt den Anteil der Batteriespannung $U_B$, der am Motor 14 angelegt wird. Die Spannung ist in Fig. 1 mit $U_S$ bezeichnet. Der Fahrschalter erzeugt in Abhängigkeit von seiner Stellung, zum Beispiel über ein Potentiometer, ein Spannungssignal $U_F$. Der Motor 14 erzeugt ein Motormoment $M_M$ bzw. Getriebeeingangsmoment. Das Ausgangsmoment des Getriebes 16 $M_G$ wird auf das Rad übertragen.

Wird der Fahrschalter 20 langsam betätigt, folgt die an den Motor angelegte Spannung $U_S$ unmittelbar der Fahrschalterspannung $U_F$. Würde dies auch bei einer plötzlichen Verstellung des Fahrschalters zum Beispiel von 0 auf 100% gelten, würde die Batteriespannung $U_B$ schlagartig an den Motor 14 gelegt werden. Wie schon ausgeführt, ist diese Betriebsweise ungünstig, weil sie zu einem zu hohen Moment führt und insbesondere die mechanischen Teile zu stark belastet, nicht gerechnet das ungünstige Beschleunigungsverhalten des Fahrzeugs. Es ist daher bekannt, in der Steuerschaltung 12 einen Wandler vorzusehen, der bei einer plötzlichen Veränderung der Fahrschalterspannung $U_F$ die Batteriespannung nach einer Zeitfunktion auf den Motor 14 gibt. Dies geschieht im Stand der Technik durch eine Rampenfunktion in Form einer Geraden, wie sie in Fig. 2 mit den Bezugszeichen 1 und 2 dargestellt ist. Die linearen Spannungsrampen 1 und 2 erreichen die Spannung, bei der die Schütze geschaltet werden, um die Batterie 10 unmittelbar an die Klemmen des Motors 14 zu schalten, zu unterschiedlichen Zeiten, beispielsweise bei 0,7 und 1,3 Sekunden. Wie erkennbar, macht die Spannung beim Schalten der Schütze einen kleinen Sprung. Dieser beruht auf den Verlusten der Steuerschaltung 12, die bei einem unmittelbaren Anlegen der Batteriespannung $U_B$ an den Motor 14 entfallen. Erfindungsgemäß wird die Rampenfunktion 3 gemäß Fig. 2 vorgesehen, die aus einem ersten geraden Funktionsabschnitt 3a und aus einem zweiten geraden Funktionsabschnitt 3b besteht. Der erste Abschnitt 3a, der im Nullpunkt beginnt, weist eine große Steigung auf. Er erreicht innerhalb sehr kurzer Zeit, beispielsweise bei 10% der Schützschaltzeit $t_R$ 70% der Batteriespannung $U_B$. Der erreichte Zwischenspannungswert ist mit $U_Z$ bezeichnet. Vom Zwischenspannungswert $U_Z$ erstreckt sich der zweite Rampenabschnitt 3b mit einer deutlich geringeren Steigung. Vergleicht man nun die Momentenverläufe für die Spannungsrampen nach Fig. 2 ergeben sich die Momentenverläufe nach Fig. 3. In Fig. 3 ist ein Grenzmoment $M_M$ eingezeichnet, das das maximale Eingangsmoment für das Getriebe 16 kennzeichnet. Man erkennt, daß bei einer Spannungsrampe 1 mit relativ kurzer Schützschaltzeit $t_r$ ein Maximum für die Momentenkurve er-reicht wird, das über dem Grenzmoment liegt. Mit anderen Worten, für das Grenzmoment $M_M$ ist die Spannungsrampe 1 nicht verwendbar. Erst die Spannungsrampe 2 zeitigt ein Maximum, das unterhalb des Grenzwertes $M_M$ liegt. Das Maximum des Momentenverlaufs für die Spannungsrampe 3 liegt etwa in gleicher Höhe wie das für die Spannungsrampe 2, wird jedoch in viel kürzerer Zeit erreicht. Außerdem erkennt man, daß das Moment bis zur Schützschaltzeit $t_r$ annähernd konstant ist. Durch die Verwendung der Spannungsrampe 3 beschleunigt daher das Fahrzeug schneller, spricht schneller an, und die Fahrzeugbeschleunigung ist gleichmäßiger (hierauf wird weiter unten noch eingegangen). Außerdem wird das Getriebe geschont.

Fig. 4 zeigt den Geschwindigkeitsverlauf des Fahrzeugs bzw. den Wegverlauf für die Spannungsrampen 1, 2 und 3. Auch daraus ergibt sich die vorteilhafte Beschleunigung für ein Fahrzeug, wenn es gemäß Spannungsrampe 3 im Hochlaufbetrieb gefahren wird.

Die Funktionsabschnitte 3a und 3b können durch folgende Gleichungen beschrieben werden:

$$U_S = (U_B - a)\,\frac{P_Y}{P_X}\,\frac{t}{t_r}$$

mit $0 < t < P_X \,.\, t_R$, wobei a die Verluste der Steuerschaltung 12 repräsentieren, $P_Y$ den Zwischenspannungswert in Prozent des Endspannungswertes und $P_X$ die Zeit, in der der Zwischenspannungswert erreicht wird, in Prozenten der Schützschaltzeit $t_r$.

$$U_S = \left(U_B - a\right)\left(\left(1 - \frac{1 - P_Y}{1 - P_X}\right) + \left(\frac{1 - P_Y}{1 - P_X}\right)\frac{t}{t_r}\right)$$

mit $P_X\, t_r < t < t_r$.

Die Funktionsabschnitte 3a, 3b der Spannungsrampe werden systemabhängig, d.h. fahrzeugabhängig so gewählt, daß das maximal zulässige Moment einer Antriebskomponente bzw. eine maximal zulässige Beschleunigung des Fahrzeugs nicht überschritten wird. Danach wird der Spannungsverlauf, insbesondere der erste Funktionsabschnitt 3a so gewählt, daß die Zeit $t_r$, die benötigt wird, das maximal zulässige Antriebsmoment aufzubauen, möglichst klein ist. Gegenüber herkömmlichen Schaltzeiten, die zwischen 0,5 und 2 Sekunden liegen, sind nunmehr kurze Schaltzeiten von 0,1 bis 0,2 Sekunden möglich, somit eine maximale Beschleunigung ohne Schädigung von Antriebskomponenten bei gleichzeitig ergonomisch günstigem Fahrverhalten.

Bei einer digitalen Ausführung der Steuerschaltung 12 kann die Spannungsrampe 3 tabellarisch in einem EPROM abgelegt sein. Um dem Anwender eines Fahrzeugs die Möglichkeit zu geben, das Anfahrverhalten nach seinen Wünschen zu gestalten, ist es zweckmäßig, eine Schar von Spannungsrampen vorzusehen, die die obigen Bedingungen erfüllen, jedoch zu unterschiedlichem Anfahrverhalten führen. Eine solche Rampenschar ist in Fig. 6 wiedergegeben. Ihnen entspricht die Schar der Momentenverläufe gemäß Fig. 7. Vor Inbetriebnahme des Geräts wählt der Anwender eine der Spannungsrampen aus der Schar nach Fig. 6 aus, nach der dann das Fahrzeug betrieben wird.

Es ist auch möglich, zwei oder mehr Spannungsrampen für ein Fahrzeug vorzusehen, die wahlweise zum Einsatz kommen. So können die Spannungsrampen lastabhängig optimiert werden. Beispielsweise kann eine Spannungsrampe für das Fahrzeugleergewicht, für ein mittleres Gewicht und für ein Maximalgewicht vorgesehen werden. Zu diesem Zweck kann mit dem Fahrzeug ein Lastsensor gekoppelt werden, dessen Signal auf die Steuerschaltung 12 gegeben wird.

## Patentansprüche

1. Verfahren zum Anlegen einer Spannung an einen Gleichstrom-Fahrmotor, insbesondere für Flurförderzeuge, bei dem die Spannung durch einen Fahrschaltersignal vorgegeben und bei schlagartiger Erhöhung des Fahrschaltersignals auf das Maximum oder einem dem Maximum angenäherten Wert, innerhalb einer vorgegebenen Zeitspannung nach Maßgabe einer vorgegebenen Spannungsfunktion (Spannungsrampe) allmählich auf den vorgegebenen Spannungswert angehoben wird, dadurch gekennzeichnet, daß die Spannungsfunktion aus zwei Abschnitten besteht, nämlich einem mit Null beginnenden ersten Funktionsabschnitt großer Steigung, bei dem die Spannung zu einem Bruchteil der vorgegebenen Spannung einen Zwischenwert erreicht und einem zweiten Abschnitt kleinerer Steigung, der sich vom Zwischenwert zum vorgegebenen Spannungswert erstreckt.

2. Verfahren nach Anspruch 1, dadurch gekennzeichnet, daß die Funktionsabschnitte von Geraden gebildet werden.

3. Verfahren nach Anspruch 1 oder 2, dadurch gekennzeichnet, daß der Zwischenspannungswert in höchstens 10 bis 20% der vorgegebenen Zeitspanne erreicht wird.

4. Verfahren nach Anspruch 3, dadurch gekennzeichnet, daß mit größer werdender Zeitspanne der Zwischenspannungswert niedriger gewählt und mit größer werdendem Anteil einer Zeitspanne erreicht wird.

5. Verfahren nach einem der Ansprüche 1 bis 4, dadurch gekennzeichnet, daß der Zwischenspannungswert so gewählt wird, daß der Momentenverlauf des Fahrmotors ab dem Zwischenspannungswert bis zum Ende der Beschleunigung bzw. Erreichen des vorgegebenen Spannungswertes annähernd konstant ist.

6. Verfahren nach Anspruch 1 und 4 oder 5, dadurch gekennzeichnet, daß zwei oder mehrere Spannungsfunktionen vorgesehen sind mit unterschiedlicher Zeitspanne und unterschiedlichem Zwischenspannungswert, die willkürlich vom Fahrer des Fahrzeugs oder automatisch in Abhängigkeit vom Gewicht des Fahrzeugs ausgewählt werden dergestalt, daß mit steigendem Gewicht die Spannungsfunktion mit der jeweils größeren Zeitspanne und dem jeweils kleineren Zwischenspannungswert gewählt wird.

7. Steuervorrichtung für einen Gleichstrom-Fahrmotor, insbesondere für Flurförderzeuge, zur Durchführung des Verfahrens nach einem der Ansprüche 1 bis 6, mit einem Fahrschalter, von dem ein Fahrschaltersignal auf eine mit einer Spannungsquelle verbundene Steuerschaltung gegeben wird, wobei die Steuerschaltung einen Wandler enthält, der bei schlagartiger Erhöhung des Fahrschaltersignals die Quellenspannung nach einer vorgegebenen Funktion an den Fahrmotor anlegt, dadurch gekennzeichnet, daß die Umwandlungsfunktion des Wandlers aus zwei Abschnitten besteht, nämlich einem mit Null beginnenden ersten Funktionsabschnitt (3a) großer Steigung, bei dem die Spannung zu einem Bruchteil der vorgegebenen Zeitspanne ($t_R$) einen Zwischenwert ($U_Z$) erreicht, und einem zweiten Abschnitt (3b) kleinerer Steigung, der sich vom Zwischenwert ($U_Z$) zum vorgegebenen Spannungswert erstreckt.

8. Vorrichtung nach Anspruch 7, dadurch gekennzeichnet, daß die Spannungsfunktion tabellarisch in einem digitalen Speicher, vorzugsweise einem EPROM, abgelegt ist.

9. Vorrichtung nach Anspruch 8, dadurch gekennzeichnet, daß eine Schar von Spannungsfunktionen im Speicher abgelegt ist.

10. Vorrichtung nach einem der Ansprüche 7 bis 9, dadurch gekennzeichnet, daß ein Gewichtssensor vorgesehen ist, dessen Signal auf die Steuerschaltung (12) gegeben wird, zwecks Auswahl einer vorgegebenen Spannungsfunktion.

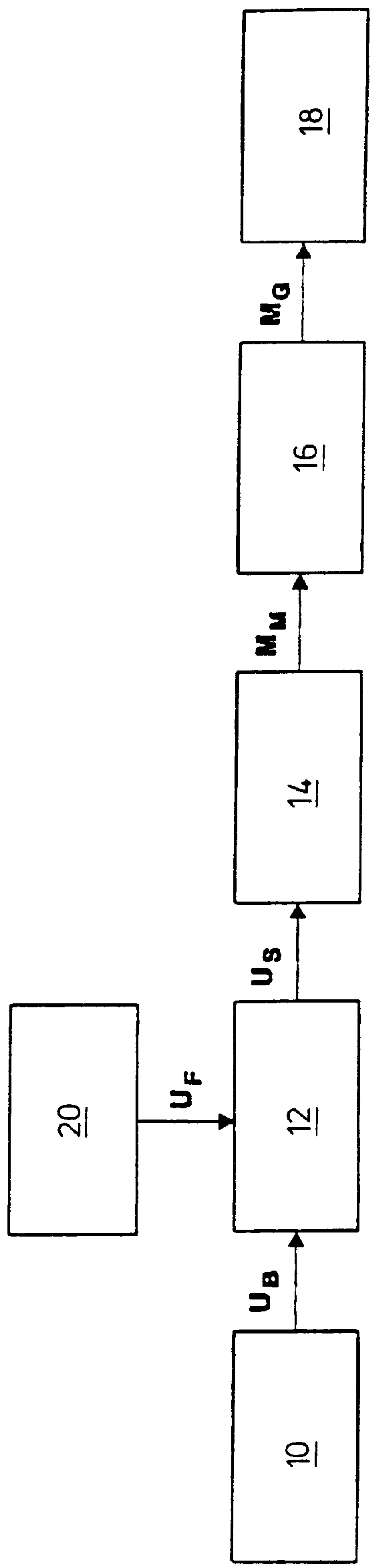


FIG.1

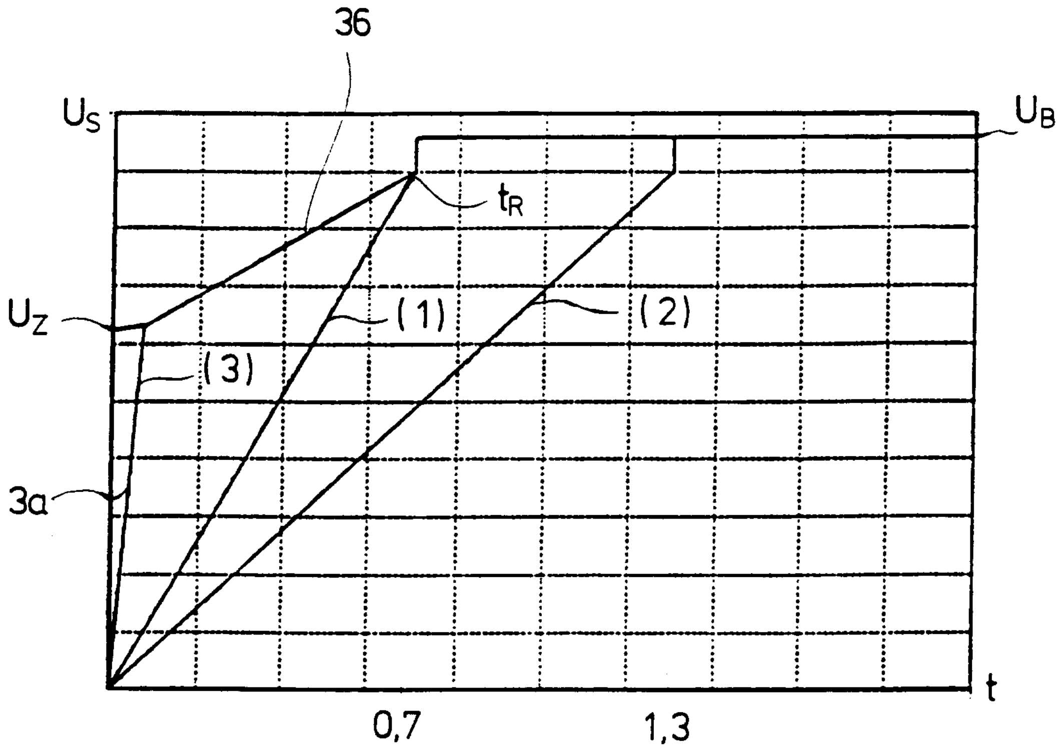


FIG.2

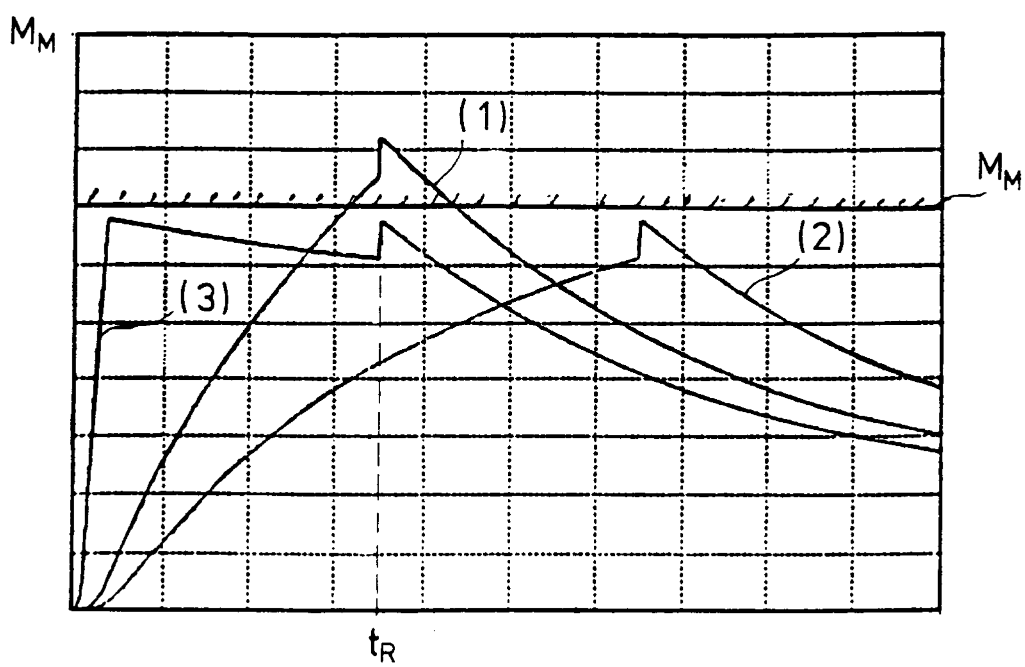


FIG.3

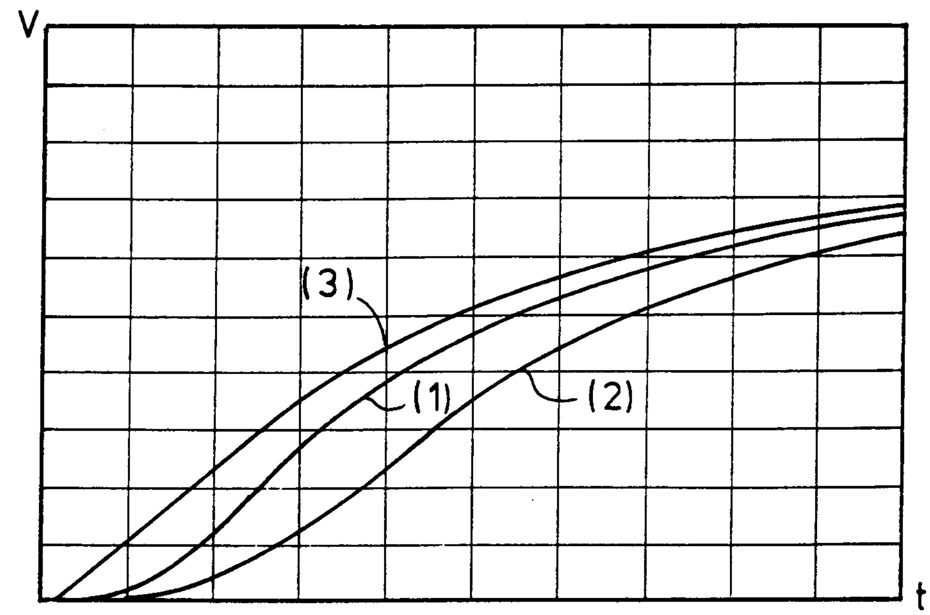


FIG.4

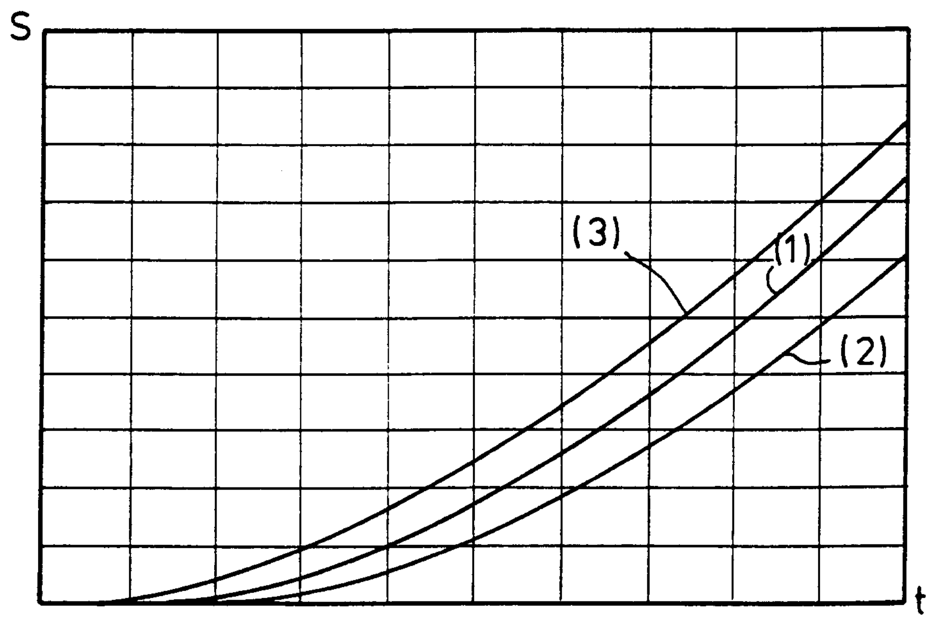


FIG.5

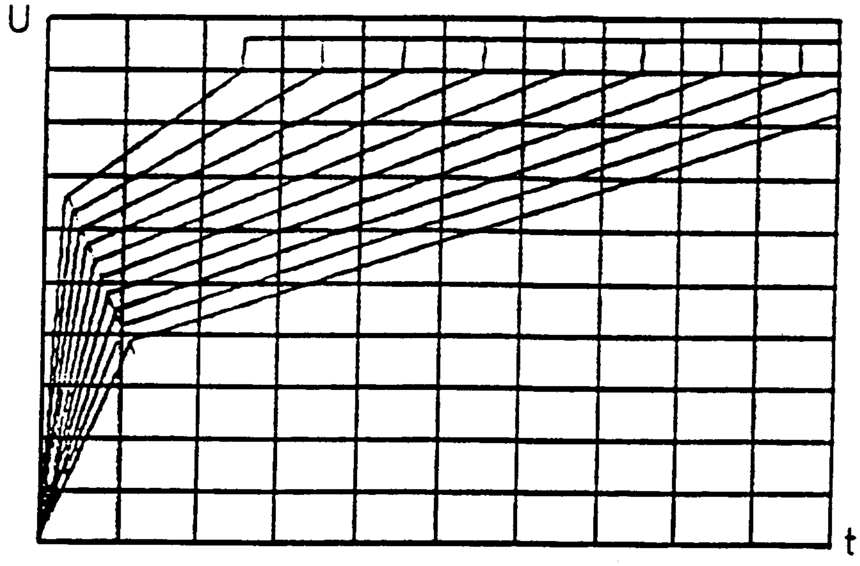


FIG.6

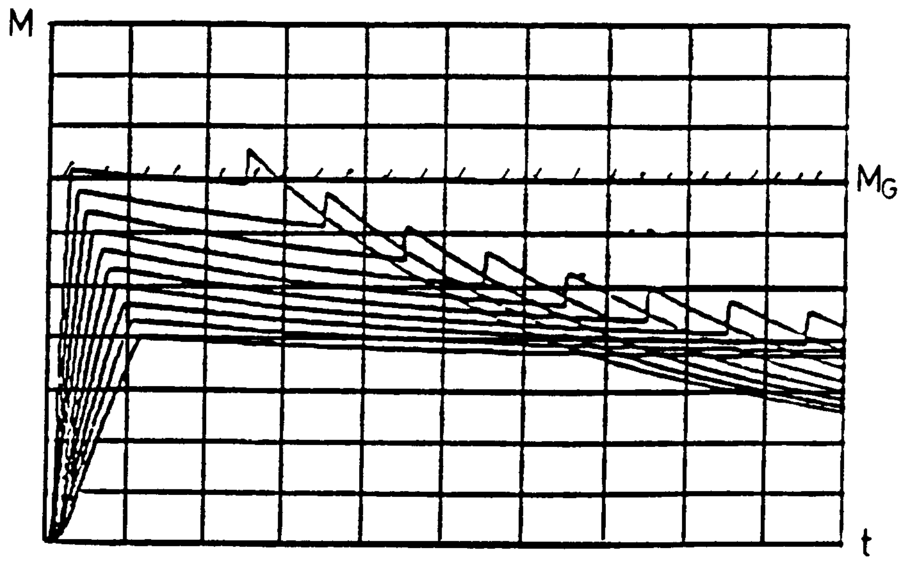


FIG.7

Europäisches Patentamt

# EUROPÄISCHER RECHERCHENBERICHT

Nummer der Anmeldung

EP 93 10 4024

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | EP-A-0 374 960 (HITACHI, LTD)<br>27. Juni 1990<br>* Seite 4, Zeile 55 - Seite 5, Zeile 58 *<br>--- | 1,2,5-10 | B60L15/10<br>B60L3/10 |
| Y | PATENT ABSTRACTS OF JAPAN<br>vol. 005, no. 097 (M-075)24. Juni 1981<br>& JP-A-56 041 702 ( HITACHI, LTD ) 18. April 1981<br>* Zusammenfassung; Abbildung 2 *<br>----- | 1,2,5-10 | |
| | | | RECHERCHIERTE SACHGEBIETE (Int. Cl.5 ) |
| | | | B60L |

Der vorliegende Recherchenbericht wurde für alle Patentansprüche erstellt

| Recherchenort | Abschlußdatum der Recherche | Prüfer |
|---|---|---|
| DEN HAAG | 13 SEPTEMBER 1993 | BOURBON R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument